# FASCICULE DE BREVET EUROPEEN

(11) **EP 3 419 246 B1**
(45) Date de publication et mention de la délivrance du brevet: **26.05.2021**
(21) Numéro de dépôt: 18305775.1
(22) Date de dépôt: 20.06.2018
(51) Int. Cl.: H04L 29/06

(54) **PROCÉDÉ D'AUTHENTIFICATION PAR DÉFI-RÉPONSE D'UN ÉLÉMENT SÉCURISÉ (SE) AUPRÈS D'UN MICROCONTRÔLEUR**
AUTHENTIFIZIERUNGSVERFAHREN MIT CHALLENGE-RESPONSE-AUTHENTIFIZIERUNG EINES GESICHERTEN ELEMENTS (SE) IN EINEM MIKROCONTROLLOR
CHALLENGE-RESPONSE AUTHENTICATION METHOD OF A SECURE ELEMENT (SE) FROM A MICROCONTROLLER

(30) Priorité: 20.06.2017 FR 1755630
(43) Date de publication de la demande: 26.12.2018
(73) Titulaire: Idemia Identity & Security France, 92400 Courbevoie (FR)
(72) Inventeur: MAGHREBI, Houssem, 92130 ISSY LES MOULINEAUX (FR); SERE, Ahmadou, 92130 ISSY LES MOULINEAUX (FR); DAILLE-LEFEVRE, David, 92130 ISSY LES MOULINEAUX (FR); CARHUEL, Deny, 92130 ISSY LES MOULINEAUX (FR)
(74) Mandataire: Regimbeau

(56) Documents cités:
- "GlobalPlatform Card Technology - Secure Channel Protocol 03 - Card Specification v 2.2 Amendment D, version", INTERNET CITATION, avril 2009 (2009-04), pages 1-16, XP009182501, Extrait de l'Internet: URL:http://www.globalplatform.org/specific ationscard.asp [extrait le 2015-02-10]
- ANONYMOUS: "Recipients of this document Card Specification", GLOBALPLATFORM CARD SPECIFICATION V2, 3 mars 2017 (2017-03-03), XP055401737,
- Lily Chen ET AL: "NIST Special Publication 800-108 Recommendation for Key Derivation Using Pseudorandom Functions (Revised) National Institute of Standards and Technology", , 1 octobre 2009 (2009-10-01), XP055177546, Extrait de l'Internet: URL:http://csrc.nist.gov/publications/nist pubs/800-108/sp800-108.pdf [extrait le 2015-03-18]

## Description

### DOMAINE DE L'INVENTION

La présente invention concerne un procédé d'authentification par défi-réponse d'un élément sécurisé auprès d'un microcontrôleur.

Ce procédé trouve avantageusement application pour conditionner l'établissement d'un canal de communication sécurisé entre l'élément sécurisé et le microcontrôleur, par exemple utilisé dans le cadre d'une authentification biométrique.

### ETAT DE LA TECHNIQUE

De façon connue en soi, un élément sécurisé (« Secure Element » en anglais), est une plate-forme matérielle inviolable, capable d'accueillir en toute sécurité des programmes et stocker des données confidentielles et cryptographiques.

Dans de nombreuses applications, l'élément sécurisé est amené à communiquer avec un autre dispositif tel qu'un microcontrôleur (« Micro Controller Unit » en anglais) via un canal de communication.

Pour préserver le caractère inviolable de l'élément sécurisé, il est requis que ce canal de communication soit lui-même sécurisé.

Un procédé connu pour établir un tel canal sécurisé est de mettre en œuvre une authentification mutuelle de l'élément sécurisé et du microcontrôleur.

Une telle authentification mutuelle comprend conventionnellement deux authentifications par défi-réponse (« challenge-response authentication » en anglais).

Dans une première authentification par défi-réponse, le microcontrôleur s'authentifie auprès de l'élément sécurisé. Pour cela, l'élément sécurisé génère une donnée de défi qui lui est propre et l'envoie au microcontrôleur ; le microcontrôleur génère une donnée de réponse sur la base de la donnée de défi qu'il reçoit et transmet la donnée de réponse à l'élément sécurisé ; l'élément sécurisé vérifie ensuite si la donnée de réponse qu'il reçoit est égale ou non à une donnée attendue, et si c'est bien le cas la deuxième authentification défi-réponse est réussie.

De manière symétrique, dans une deuxième authentification par défi-réponse, l'élément sécurisé s'authentifie auprès du microcontrôleur. Pour cela, le microcontrôleur génère une donnée de défi qui lui est propre et l'envoie à l'élément sécurisé ; l'élément sécurisé génère une donnée de réponse sur la base de la donnée de défi qu'il reçoit et transmet la donnée de réponse au microcontrôleur ; le microcontrôleur vérifie ensuite si la donnée de réponse qu'il reçoit est égale ou non à une donnée attendue, et si c'est bien le cas la deuxième authentification défi-réponse est réussie.

Le canal sécurisé n'est établi que si l'authentification mutuelle a réussi, c'est-à-dire qui si les deux authentifications par défi-réponse symétriques ont réussi.

Il est essentiel que les deux données de défi soient générées respectivement par les deux entités en présence (le microcontrôleur et l'élément sécurisé), et ce de manière aléatoire pour conférer un niveau de sécurité suffisant à l'authentification mutuelle. Ces deux contraintes sont notamment requises pour mettre en œuvre les protocoles SCP02 et SCP03 définis par l'association GlobalPlatform. En particulier, une version du protocole SCP03 est décrit dans le document « GlobalPlatform Card Technology - Secure Channel Protocol 03 - Card Spécification v 2.2 Amendment D ».

Une façon simple de respecter ces contraintes est d'embarquer dans chacune des deux entités en présence un générateur d'aléa (« Random Number Generator » en anglais »).

Cette solution a toutefois pour inconvénient d'être peu flexible et potentiellement onéreuse du fait de la configuration matérielle particulière des deux entités que les deux générateurs d'aléa requièrent.

### EXPOSE DE L'INVENTION

Un but de l'invention est de proposer un procédé d'authentification par défi-réponse d'un élément sécurisé auprès d'un microcontrôleur utilisable dans des systèmes à faible coût.

Il est dès lors proposé, selon un premier aspect de l'invention, un procédé d'authentification par défi-réponse d'un élément sécurisé auprès d'un microcontrôleur dépourvu de générateur d'aléa, le procédé comprenant les étapes suivantes mises en œuvre par le microcontrôleur :
- réception d'au moins une donnée d'aléa générée aléatoirement par l'élément sécurisé,
- génération d'une donnée de défi propre au microcontrôleur à partir de la donnée d'aléa reçue,
- envoi de la donnée de défi générée à l'élément sécurisé,
- réception d'une donnée de réponse générée par l'élément sécurisé en fonction de la donnée de défi,
- détermination d'un résultat d'authentification en fonction de la donnée de réponse reçue.

Il est également proposé, selon un deuxième aspect de l'invention, un procédé d'authentification par défi-réponse d'un élément sécurisé auprès d'un microcontrôleur dépourvu de générateur d'aléa, le procédé comprenant les étapes suivantes mises en œuvre par l'élément sécurisé :
- génération aléatoire d'au moins une donnée d'aléa,
- envoi de la donnée d'aléa au microcontrôleur,
- réception d'une donnée de défi propre au microcontrôleur et générée par le microcontrôleur à partir de la donnée d'aléa envoyée,
- génération d'une donnée de réponse dépendant de la donnée de défi reçue,
- envoi de la donnée de réponse au microcontrôleur en vue de la détermination d'un résultat d'authentification en fonction de la donnée de réponse envoyée.

Dans les procédés selon la présente invention, la donnée de défi propre au microcontrôleur n'est pas générée au moyen d'un générateur d'aléa interne au microcontrôleur, mais est générée à l'aide d'une donnée d'aléa qui est fournie par l'élément sécurisé. De plus, le fait de ne pas incorporer de générateur d'aléa dans le microcontrôleur, devenu non nécessaire du fait de cette astuce, permet de réduire le coût de fabrication du microcontrôleur. Par conséquent, le procédé d'authentification par défi-réponse peut être mise en œuvre dans un système dont le coût global est réduit.

Les procédés selon le premier et le deuxième aspect de l'invention peuvent être complétés à l'aide des caractéristiques suivantes, prises seules ou bien en combinaison lorsque cela est techniquement possible.

L'élément sécurisé peut recevoir un ensemble de données d'aléa au cours de l'étape de réception d'au moins une donnée d'aléa, et la génération de la donnée de défi comprendre des sous-étapes de
- sélection de deux données d'aléa dans l'ensemble de données d'aléa reçu,
- chiffrement de l'une des deux donnée d'aléa en utilisant l'autre des deux données d'aléa comme clé de chiffrement, de sorte à produire une donnée d'aléa chiffrée, la donnée de défi dépendant de la donnée d'aléa chiffrée.

L'ensemble de données d'aléa peut comprendre une table et une donnée d'index associée à la table, et une des deux données d'aléa peut alors être une partie de la table localisée d'après la donnée d'index. L'autre des deux données d'aléa peut être une partie de la table complémentaire à la partie localisée d'après la donnée d'index.

La génération de la donnée de défi peut comprendre en outre une troncature de la donnée d'aléa chiffrée.

L'élément sécurisé peut vérifier la donnée de défi qu'il reçoit, cette vérification comprenant alors des étapes de
- génération par l'élément sécurisé d'une autre donnée de défi à partir de la donnée d'aléa générée,
- comparaison entre la donnée de défi reçue par l'élément sécurisé du microcontrôleur et de l'autre donnée de défi générée par l'élément sécurisé,
- mise en oeuvre d'une mesure de sécurité adaptée pour que le résultat d'authentification soit négatif lorsque les deux données de défi comparées sont différentes.

L'élément sécurisé peut être une carte à puce et/ou le microcontrôleur être une interface de transmission de données biométriques préalablement acquises par un capteur biométrique à l'élément sécurisé.

Selon un troisième aspect de l'invention, il est proposé un procédé d'authentification biométrique comprenant les étapes suivantes :
- authentification par défi-réponse d'un élément sécurisé auprès d'un microcontrôleur dépourvu de générateur d'aléa au moyen du procédé selon le premier aspect ou le deuxième aspect de l'invention,
- autorisation, par le microcontrôleur, de l'établissement d'un canal de de communication sécurisé entre l'élément sécurisé et le microcontrôleur à condition que le résultat de l'authentification par défi-réponse soit positif,
- transmission, par le microcontrôleur à l'élément sécurisé, de données biométriques préalablement acquises par un capteur biométrique via canal sécurisé établi.

Selon un quatrième aspect de l'invention, il est en outre proposé un produit programme d'ordinateur comprenant des instructions de code de programme pour l'exécution des étapes du procédé selon le premier ou le deuxième aspect de l'invention, lorsque ce programme est exécuté par au moins un processeur.

Selon un cinquième aspect de l'invention, il est proposé un microcontrôleur dépourvu de générateur d'aléa et comprenant une interface de communication avec un élément sécurisé ainsi qu'au moins un processeur configuré pour, au cours d'une authentification de l'élément sécurisé par défi-réponse auprès du microcontrôleur,
- recevoir, via l'interface de communication, au moins une donnée d'aléa générée aléatoirement par l'élément sécurisé,
- générer une donnée de défi propre au microcontrôleur à partir de la donnée d'aléa reçue,
- commander l'envoi par l'interface de communication de la donnée de défi générée à l'élément sécurisé,
- recevoir, via l'interface de communication, une donnée de réponse générée par l'élément sécurisé en fonction de la donnée de défi,
- déterminer un résultat d'authentification en fonction de la donnée de réponse reçue.

Selon un sixième aspect de l'invention, il est proposé en outre un élément sécurisé comprenant une interface de communication avec un microcontrôleur dépourvu de générateur d'aléa, l'élément sécurisé comprenant par ailleurs au moins un processeur configuré pour, au cours d'une authentification de l'élément sécurisé par défi-réponse auprès du microcontrôleur,
- générer aléatoirement au moins une donnée d'aléa,
- commander l'envoi de la donnée d'aléa au microcontrôleur MCU par l'interface de communication,
- recevoir une donnée de défi propre au microcontrôleur MCU et générée par le microcontrôleur MCU à partir de la donnée d'aléa envoyée,
- générer une donnée de réponse dépendant de la donnée de défi reçue,
- commander l'envoi par l'interface de communication(12) de la donnée de réponse au microcontrôleur en vue d'une détermination d'un résultat d'authentification en fonction de la donnée de réponse envoyée.

Selon un septième aspect de l'invention, il est également proposé un système d'authentification biométrique comprenant un microcontrôleur selon le cinquième aspect de l'invention et un élément sécurisé selon le sixième aspect de l'invention, dans lequel le microcontrôleur est ailleurs configuré pour
- autoriser l'établissement d'un canal de de communication sécurisé entre l'élément sécurisé et le microcontrôleur à condition que le résultat de l'authentification par défi-réponse soit positif,
- transmettre à l'élément sécurisé via le canal sécurisé établi des données biométriques préalablement acquises par un capteur biométrique.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente schématiquement un système d'authentification biométrique selon un mode de réalisation de l'invention.
- La figure 2 est un organigramme d'étapes d'un procédé d'authentification biométrique selon un mode de réalisation de l'invention.
- La figure 3 est un organigramme de sous-étapes d'une étape faisant partie du procédé de la figure 2.
- La figure 4 représente deux données d'aléa utilisées au cours de la mise en œuvre du procédé des figures 2 et 3.
Sur l'ensemble des figures, les éléments similaires portent des références identiques.

### DESCRIPTION DETAILLEE DE L'INVENTION

### A/ Système d'authentification biométrique

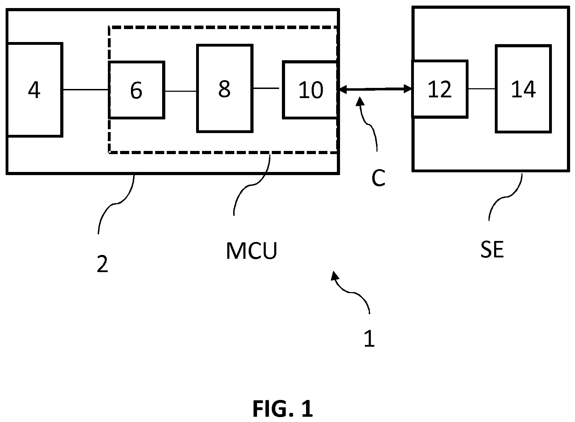

En référence à la **figure 1**, un système d'authentification biométrique 1 comprend un terminal 2 et un élément sécurisé SE.

Le terminal 2 comprend un capteur biométrique 4 et un microcontrôleur MCU.

Le capteur biométrique 4 est configuré pour acquérir des données biométriques, telles que des empreintes digitales.

Le microcontrôleur MCU comprend une interface de communication 6 avec le capteur biométrique 4, au moins un processeur 8, et une interface de communication 10 avec l'élément sécurisé SE.

En revanche, le microcontrôleur MCU ne comprend pas de générateur d'aléa interne. Le microcontrôleur MCU n'est pas soumis aux mêmes exigences de sécurité que l'élément sécurisé SE, donc de complexité et de coût bien moindres que ce dernier.

L'interface de communication 6 avec le capteur biométrique 4 est par exemple une interface filaire au sein du terminal 2.

L'interface de communication 10 avec l'élément sécurisé SE est par exemple une interface filaire ou sans fil. Par exemple, l'interface de communication 10 avec l'élément sécurisé SE comprend un lecteur comprenant un logement pour recevoir l'élément sécurisé SE, de sorte que le microcontrôleur MCU et l'élément sécurisé SE soient mis en contact électrique. Alternativement l'interface de communication avec l'élément sécurisé SE comprend une puce de communication en champ proche (« Near Field Communication », abrégé en NFC en anglais).

Par ailleurs, l'élément sécurisé SE comprend une interface de communication 12 avec le microcontrôleur MCU, et au moins un processeur 14 adapté pour mettre en œuvre des traitements cryptographiques. Un de ces traitements a pour but de vérifier des données biométriques qui sont transmises à l'élément sécurisé.

L'interface de communication 12 de l'élément sécurisé SE est plus précisément adaptée pour dialoguer avec l'interface de communication 10 du microcontrôleur MCU.

L'élément sécurisé SE comprend par ailleurs un générateur d'aléa. Le générateur d'aléa un composant dédié ou bien un programme destiné à être exécuté par le processeur 14 de l'élément sécurisé SE.

L'élément sécurisé SE est par exemple une carte à puce.

### B/ Procédé d'authentification biométrique

Un procédé d'authentification biométrique d'un individu mis en œuvre par le système d'authentification 1 comprend deux phases :
- une phase préliminaire d'établissement d'un canal sécurisé C entre le microcontrôleur MCU et l'élément sécurisé SE,
- une phase d'authentification à proprement parler, au cours de laquelle ce canal sécurisé C est exploité pour transporter des données.

La phase préliminaire comprend une authentification mutuelle de l'élément sécurisé SE et du microcontrôleur MCU.

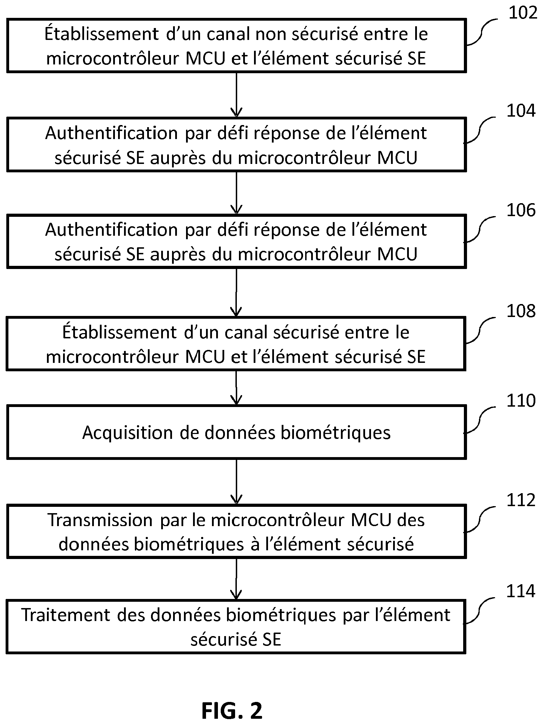

En référence à la **figure 2****,** l'authentification mutuelle comprend une étape d'établissement d'un canal C non sécurisé entre les interfaces de communication 10 et 22 selon une méthode connue de l'état de la technique (étape 102). Dans ce qui suit, des données communiquées entre l'élément sécurisé SE et le microcontrôleur MCU transitent par ce canal non sécurisé C, sauf mention explicite contraire.

L'authentification mutuelle comprend en outre une première authentification par défi-réponse du microcontrôleur MCU auprès de l'élément sécurisé SE (étape 104). Cette première authentification par défi-réponse, conventionnelle, comprend les étapes suivantes :
- le générateur d'aléa de l'élément sécurisé SE génère une donnée de défi,
- l'élément sécurisé SE envoie, par son interface de communication 12, la donnée de défi qui lui est propre au microcontrôleur MCU ;
- le microcontrôleur MCU génère une donnée de réponse sur la base de la donnée de défi qu'il reçoit et transmet la donnée de réponse à l'élément sécurisé SE par son interface de communication 10 ;
- l'élément sécurisé SE détermine un résultat d'authentification positif ou négatif en fonction de la donnée de réponse reçue, par exemple en vérifiant si la donnée de réponse qu'il reçoit est égale ou non à une donnée attendue. Si la donnée de réponse est bien égale à la donnée attendue, le résultat est positif ce qui signifie que la première authentification défi-réponse 104 est réussie. Sinon, le résultat est négatif est la première authentification 104 échoue.

L'authentification mutuelle comprend en outre une deuxième authentification défi-réponse de l'élément sécurisé SE auprès du microcontrôleur MCU (étape 106).

Les deux authentifications 104 et 106 peuvent être mises en œuvre séquentiellement dans un ordre quelconque ou de manière concomitante.

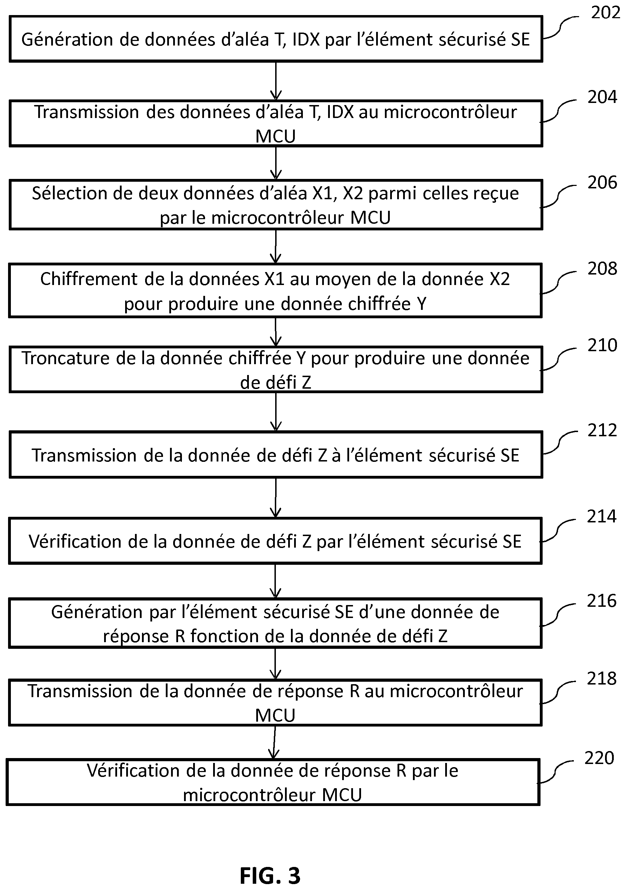

En référence à l'organigramme de la **figure 3****,** la deuxième authentification 106, non conventionnelle, comprend les sous-étapes suivantes.

L'élément sécurisé SE génère au moins une donnée d'aléa (étape 202), par exemple au moyen du même générateur d'aléa que celui utilisé au cours de l'étape 104.

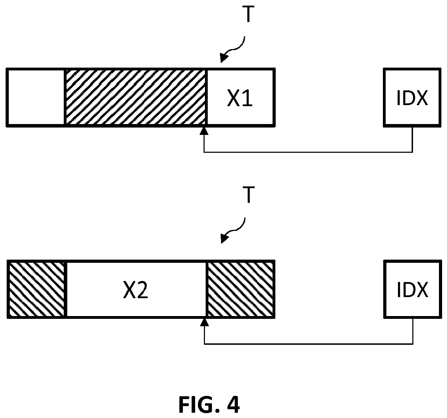

Dans un mode de réalisation qui est pris comme exemple non limitatif dans la suite, sont générées par l'élément sécurisé SE une table d'aléa T et une donnée d'index IDX en guise de données d'aléa, ces données d'aléa étant illustrées en **figure 4****.** La table d'index T constitue un ensemble d'où plusieurs données peuvent être extraites. La donnée d'index IDX indique une position dans la table T ; la donnée d'index IDX est par exemple codée sur un octet.

Les deux données d'aléa T et IDX sont générées par le générateur d'aléa de l'élément sécurisé SE de manière indépendante, c'est-à-dire que l'une de ces données n'est pas générée à partir de l'autre donnée.

Les données d'aléa T, IDX sont transmises par l'interface de communication 12 au microcontrôleur MCU (étape 204).

Après leur réception par l'interface de communication 10, le processeur 8 du microcontrôleur MCU utilise les données d'aléa T, IDX générées par l'élément sécurisé SE pour générer une donnée de défi Z propre à ce microcontrôleur MCU.

Pour cela, le microcontrôleur MCU sélectionne une première donnée d'aléa X1 et une deuxième donnée d'aléa X2 différente de X1 dans l'ensemble de données d'aléa formé par la table T reçue (étape 206).

De préférence, cette sélection 206 dépend de la donnée d'index IDX préalablement générée aléatoirement par l'élément sécurisé, de façon à augmenter le nombre de sélections possibles et donc la sécurité de la génération de la donnée de défi du côté du microcontrôleur MCU.

La première donnée d'aléa X1 est par exemple une première partie de la table T, localisée au moyen de la donnée d'index IDX. Par exemple, la première partie est une partie de la table T de taille prédéterminée démarrant à une adresse relative dans la table T, laquelle est indiquée par la donnée d'index IDX comme cela est représenté en figure 4. La table T est considérée comme un buffer circulaire dans le sens où la première partie X1 peut comprendre des bits en fin de table et en début de table dans le cas où l'adresse relative plus la taille prédéterminée est égale à une adresse supérieure pointe au-delà de la table d'aléa.

Le microcontrôleur MCU sélectionne par ailleurs en tant que deuxième donnée X2 une deuxième partie de la table T, par exemple disjointe de la première partie, voire complémentaire à celle-ci dans la table T.

Par exemple, les deux parties de la table X1 et X2 ont chacune 16 octets lorsque la table a 32 octets.

Le microcontrôleur MCU chiffre ensuite la première donnée d'aléa X1 en utilisant la deuxième donnée d'aléa X2 comme clé de chiffrement, de sorte à produire une donnée d'aléa chiffrée Y dont dépend la donnée de défi Z (étape 208). L'algorithme de chiffrement utilisé au cours de cette étape 208 est par exemple l'algorithme AES. D'autres algorithmes que l'AES peuvent cependant être utilisés au cours de l'étape 208.

La donnée d'aléa chiffrée Y est ensuite tronquée, la donnée de défi Z étant le résultat de cette troncature de la donnée d'aléa chiffrée Y (étape 210). La troncature élimine par exemple les 8 octets de poids les plus forts ou les plus faibles de la donnée d'aléa chiffrée Y, de sorte à obtenir une donnée de défi Z ayant 8 octets.

Pour parvenir à obtenir la donnée de défi Z, un attaquant aurait besoin de récupérer la table T, mais également la donnée d'index IDX, et savoir comment ces données sont combinées pour générer la donnée Z, ce qui est particulièrement difficile à mettre en œuvre. Chacune des étapes 208, 210 et 212 contribue donc à augmenter le niveau de sécurité de l'authentification 106 de l'élément sécurisé auprès du microcontrôleur.

Les étapes suivantes de la deuxième authentification défi-réponse sont conventionnelles :
- le microcontrôleur MCU envoie, par son interface de communication 10, la donnée de défi Z qui lui est propre à l'élément sécurisé SE (étape 212) ;
- l'élément sécurisé SE génère une donnée de réponse R sur la base de la donnée de défi Z qu'il reçoit (étape 216) et transmet la donnée de réponse R au microcontrôleur MCU (étape 218) ;
- le microcontrôleur MCU détermine un résultat d'authentification positif ou négatif en fonction de la donnée de réponse R reçue (étape 220), par exemple en vérifiant si la donnée de réponse R qu'il reçoit est égale ou non à une donnée attendue. La donnée attendue est liée à la donnée de défi par une relation mathématique prédéterminée. Si la donnée de réponse R est bien égale à la donnée attendue, le résultat est positif ce qui signifie que l'authentification défi-réponse 106 est réussie. Sinon le résultat est négatif est la deuxième authentification 106 échoue.

A titre complémentaire, l'élément sécurisé SE peut procéder à une vérification d'intégrité de la donnée de défi Z qu'il reçoit du microcontrôleur MCU (étape 214). Cette vérification 214 est effectuée en comparant la donnée de défi Z reçue du microcontrôleur MCU avec une autre donnée de défi générée en interne par l'élément sécurisé SE, au moyen des mêmes étapes 208, 210, 212 que celles mises en œuvre par le microcontrôleur MCU, les données d'aléa initialement générées par l'élément sécurisé SE au cours de l'étape 202 ayant été mémorisées entre temps par ce dernier.

Si les deux données de défi comparées au cours de l'étape 214 sont de valeurs différentes, une attaque par injection de faute ayant eu pour effet de corrompre la donnée de défi Z générée par le microcontrôleur MCU peut s'être produite : Il est alors fait en sorte que le résultat de la deuxième authentification soit négatif. Par exemple, la donnée de réponse R n'est pas envoyée par l'élément sécurisé SE au microcontrôleur MCU ou une donnée de réponse R de valeur sciemment erronée est envoyée par l'élément sécurisé SE au microcontrôleur MCU pour générer une erreur, du côté du microcontrôleur MCU, au cours de l'étape de vérification 220.

Dans le cas contraire (si les deux données de défi comparées au cours de l'étape 214 sont identiques), la donnée de défi Z a été générée de façon conforme par l'élément sécurisé SE, et une donnée de réponse correcte est transmise au cours de l'étape 218.

Un canal sécurisé n'est établi que si l'authentification mutuelle a réussi, c'est-à-dire qui si les deux authentifications par défi-réponse 104, 106 ont toutes les deux réussi.

Le canal sécurisé est par exemple établi conformément au protocole SCP02 ou au protocole SCP03 définis par l'association GlobalPlatform.

Une fois que le canal sécurisé est établi, la deuxième phase peut être mise en œuvre. La deuxième phase comprend les étapes suivantes.

De retour à la **figure 2****,** le capteur biométrique 4 acquiert une donnée biométrique (par exemple, une empreinte digitale) (étape 110).

Cette donnée biométrique est ensuite transmise au microcontrôleur MCU, qui la retransmet dans le canal sécurisé établi au cours de la phase préliminaire avec l'élément sécurisé SE (étape 112).

L'élément sécurisé SE reçoit la donnée biométrique et la traite (étape 114).

Ce traitement 114 comprend par exemple une comparaison entre cette donnée biométrique acquise avec une donnée de référence. En fonction du résultat de cette comparaison, l'individu est correctement authentifié ou non sur la base des données biométriques acquises.

Les étapes de l'authentification 106 peuvent être répétées une fois que le canal sécurisé entre l'élément sécurisé SE et le microcontrôleur MCU a été établi au cours de l'étape 108. Par exemple, il se peut que des clés de sessions soient générées au cours de l'authentification mutuelle. A chaque nouvelle authentification, de nouvelles clés de sessions sont générées. Dans ce cas, une nouvelle table T peut être générée toutes les 16 clés de sessions.

En particulier, les données d'aléa T, IDX peuvent être transmises au cours d'une nouvelle mise en œuvre de l'étape 204 dans le canal sécurisé déjà établi. Il en va de même pour les étapes 212 et 218.

L'invention n'est pas limitée aux modes de réalisation décrits précédemment. Dans un autre mode de réalisation, l'élément sécurisé ne génère pas de donnée d'index. Cette donnée d'index IDX est prédéterminée et stockée dans le microcontrôleur MCU, voire également dans l'élément sécurisé si l'étape de vérification 214 de la donnée de défi Z est mise en œuvre. Toutefois, la donnée IDX n'est pas transmise via le canal C.

## Revendications

1. Procédé d'authentification par défi-réponse (106) d'un élément sécurisé (SE) auprès d'un microcontrôleur (MCU) dépourvu de générateur d'aléa, le procédé comprenant les étapes suivantes mises en œuvre par le microcontrôleur (MCU) :
• réception d'au moins une donnée d'aléa (T, IDX) générée aléatoirement par l'élément sécurisé (SE),
• génération (206, 208, 210) d'une donnée de défi (Z) propre au microcontrôleur (MCU) à partir de la donnée d'aléa (T, IDX) reçue,
• envoi (212) de la donnée de défi (Z) générée à l'élément sécurisé (SE),
• réception d'une donnée de réponse (R) générée par l'élément sécurisé (SE) en fonction de la donnée de défi (Z),
• détermination (220) d'un résultat d'authentification en fonction de la donnée de réponse reçue.

2. Procédé selon la revendication 1, dans lequel l'élément sécurisé (SE) reçoit un ensemble de données d'aléa (T, IDX) au cours de l'étape de réception d'au moins une donnée d'aléa, et dans lequel la génération de la donnée de défi (Z) comprend des sous-étapes de
• sélection (206) de deux données d'aléa (X1, X2) dans l'ensemble de données d'aléa reçu,
• chiffrement (208) de l'une (X1) des deux donnée d'aléa en utilisant l'autre (X2) des deux données d'aléa comme clé de chiffrement, de sorte à produire une donnée d'aléa chiffrée (Y), la donnée de défi (Z) dépendant de la donnée d'aléa chiffrée (Y).

3. Procédé selon la revendication 2, dans lequel l'ensemble de données d'aléa comprend une table (T) et une donnée d'index (IDX) associée à la table (T), et dans lequel une des deux données d'aléa (X1) est une partie de la table (T) localisée d'après la donnée d'index (IDX).

4. Procédé selon la revendication 3, dans lequel l'autre des deux données d'aléa (X2) est une partie de la table (T) complémentaire à la partie localisée d'après la donnée d'index (IDX).

5. Procédé selon l'une des revendications 2 à 4, dans lequel la génération de la donnée de défi comprend en outre une troncature (210) de la donnée d'aléa chiffrée (Y).

6. Procédé d'authentification par défi-réponse d'un élément sécurisé (SE) auprès d'un microcontrôleur (MCU) dépourvu de générateur d'aléa, le procédé comprenant les étapes suivantes mises en œuvre par l'élément sécurisé (SE) :
• génération (202) aléatoire d'au moins une donnée d'aléa (T, IDX),
• envoi (204) de la donnée d'aléa (T, IDX) au microcontrôleur (MCU),
• réception d'une donnée de défi (Z) propre au microcontrôleur (MCU) et générée par le microcontrôleur (MCU) à partir de la donnée d'aléa (T, IDX) envoyée,
• génération (216) d'une donnée de réponse (R) dépendant de la donnée de défi (Z) reçue,
• envoi (218) de la donnée de réponse (R) au microcontrôleur (MCU) en vue de la détermination d'un résultat d'authentification en fonction de la donnée de réponse (R) envoyée.

7. Procédé selon la revendication 6, comprenant en outre des étapes de
• génération par l'élément sécurisé (SE) d'une autre donnée de défi à partir de la donnée d'aléa générée,
• comparaison (214) entre la donnée de défi reçue par l'élément sécurisé (SE) du microcontrôleur (MCU) et de l'autre donnée de défi générée par l'élément sécurisé (SE),
• mise en oeuvre d'une mesure de sécurité adaptée pour que le résultat d'authentification soit négatif lorsque les deux données de défi comparées sont différentes.

8. Procédé selon l'une des revendications précédentes, dans lequel l'élément sécurisé (SE) est une carte à puce et/ou dans lequel le microcontrôleur (MCU) est une interface de transmission de données biométriques préalablement acquises par un capteur biométrique (4) à l'élément sécurisé (SE).

9. Procédé comprenant une authentification par défi-réponse (106) d'un élément sécurisé (SE) auprès d'un microcontrôleur (MCU) dépourvu de générateur d'aléa au moyen du procédé selon l'une des revendications précédentes, et une authentification biométrique, mise en œuvre après l'authentification par défi-réponse, comprenant des étapes de :
• autorisation, par le microcontrôleur (MCU), de l'établissement (108) d'un canal de de communication sécurisé entre l'élément sécurisé (SE) et le microcontrôleur (MCU) à condition que le résultat de l'authentification par défi-réponse (106) soit positif,
• transmission (112), par le microcontrôleur (MCU) à l'élément sécurisé (SE), de données biométriques préalablement acquises par un capteur biométrique (4) via canal sécurisé établi.

10. Produit programme d'ordinateur comprenant des instructions de code de programme pour l'exécution des étapes du procédé selon l'une des revendications précédentes, lorsque ce programme est exécuté par au moins un processeur (8, 14).

11. Microcontrôleur (MCU) dépourvu de générateur d'aléa et comprenant une interface de communication (10) avec un élément sécurisé (SE) ainsi qu'au moins un processeur (8) configuré pour, au cours d'une authentification de l'élément sécurisé (SE) par défi-réponse auprès du microcontrôleur (MCU),
• recevoir, via l'interface de communication (10), au moins une donnée d'aléa générée aléatoirement par l'élément sécurisé (SE),
• générer une donnée de défi propre au microcontrôleur (MCU) à partir de la donnée d'aléa reçue,
• commander l'envoi par l'interface de communication (10) de la donnée de défi générée à l'élément sécurisé (SE),
• recevoir, via l'interface de communication (10), une donnée de réponse générée par l'élément sécurisé (SE) en fonction de la donnée de défi,
• déterminer un résultat d'authentification en fonction de la donnée de réponse reçue.

12. Elément sécurisé (SE) comprenant une interface de communication (12) avec un microcontrôleur (MCU) dépourvu de générateur d'aléa, l'élément sécurisé (SE) comprenant par ailleurs au moins un processeur (14) configuré pour, au cours d'une authentification de l'élément sécurisé (SE) par défi-réponse auprès du microcontrôleur (MCU),
• générer aléatoirement au moins une donnée d'aléa,
• commander l'envoi de la donnée d'aléa au microcontrôleur (MCU) par l'interface de communication (12),
• recevoir une donnée de défi propre au microcontrôleur (MCU) et générée par le microcontrôleur (MCU) à partir de la donnée d'aléa envoyée,
• générer une donnée de réponse dépendant de la donnée de défi reçue,
• commander l'envoi par l'interface de communication(12) de la donnée de réponse au microcontrôleur (MCU) en vue d'une détermination d'un résultat d'authentification en fonction de la donnée de réponse envoyée.

13. Système d'authentification biométrique (1) comprenant un microcontrôleur (MCU) selon la revendication 11 et un élément sécurisé (SE) selon la revendication 12, dans lequel le microcontrôleur (MCU) est ailleurs configuré pour
• autoriser l'établissement d'un canal de de communication sécurisé entre l'élément sécurisé (SE) et le microcontrôleur (MCU) à condition que le résultat de l'authentification par défi-réponse soit positif,
• transmettre à l'élément sécurisé (SE) via le canal sécurisé établi des données biométriques préalablement acquises par un capteur biométrique (4).

## Patentansprüche

1. Authentifizierungsverfahren durch Challenge-Response (106) eines gesicherten Elements (SE) in einem Mikrocontroller (MCU), der mit keinem Zufallsgenerator versehen ist, wobei das Verfahren die folgenden Schritte umfasst, die von dem Mikrocontroller (MCU) ausgeführt werden:
- Empfangen mindestens eines Zufallsdatums (T, IDX), das zufällig durch das gesicherte Element (SE) generiert wird,
- Generieren (206, 208, 210) eines dem Mikrocontroller (MCU) eigenen Challenge-Datums (Z) aus dem empfangenen Zufallsdatum (T, IDX),
- Senden (212) des generierten Challenge-Datums (Z) an das gesicherte Element (SE),
- Empfangen eines durch das gesicherte Element (SE) generierten Antwortdatums (R) in Abhängigkeit von dem Challenge-Datum (Z),
- Bestimmen (220) eines Authentifizierungsergebnisses in Abhängigkeit von dem empfangenen Antwortdatum.

2. Verfahren nach Anspruch 1, wobei das gesicherte Element (SE) eine Einheit von Zufallsdaten (T, IDX) im Laufe des Schrittes des Empfangens mindestens eines Zufallsdatums empfängt, und wobei das Generieren des Challenge-Datums (Z) die Teilschritte umfasst zum
- Auswählen (206) von zwei Zufallsdaten (X1, X2) aus der Einheit von empfangenen Zufallsdaten,
- Verschlüsseln (208) des einen (X1) der beiden Zufallsdaten unter Verwendung des anderen (X2) der beiden Zufallsdaten als Verschlüsselungsschlüssel, derart, um ein verschlüsseltes Zufallsdatum (Y) zu erzeugen, wobei das Challenge-Datum (Z) von dem verschlüsselten Zufallsdatum (Y) abhängig ist.

3. Verfahren nach Anspruch 2, wobei die Einheit von Zufallsdaten eine Tabelle (T) und ein Indexdatum (IDX) umfasst, das der Tabelle (T) zugewiesen ist, und wobei eines der beiden Zufallsdaten (X1) ein Teil der nach dem Indexdatum (IDX) lokalisierten Tabelle (T) ist.

4. Verfahren nach Anspruch 3, wobei das andere der beiden Zufallsdaten (X2) ein zu dem nach dem Indexdatum (IDX) lokalisierten Teil ergänzender Teil der Tabelle (T) ist.

5. Verfahren nach einem der Ansprüche 2 bis 4, wobei das Generieren des Challenge-Datums weiter eine Trunkierung (210) des verschlüsselten Zufallsdatums (Y) ist.

6. Authentifizierungsverfahren durch Challenge-Response eines gesicherten Elements (SE) in einem Mikrocontroller (MCU), der mit keinem Zufallsgenerator versehen ist, wobei das Verfahren die folgenden Schritte umfasst, die von dem gesicherten Element (SE) ausgeführt werden:
- zufälliges Generieren (202) mindestens eines Zufallsdatums (T, IDX),
- Senden (204) des Zufallsdatums (T, IDX) an den Mikrocontroller (MCU),
- Empfangen eines dem Mikrocontroller (MCU) eigenen, und durch den Mikrocontroller (MCU) aus dem gesendeten Zufallsdatum (T, IDX) generierten Challenge-Datums (Z),
- Generieren (216) eines Antwortdatums (R) in Abhängigkeit von dem empfangenen Challenge-Datum (Z),
- Senden (218) des Antwortdatums (R) an den Mikrocontroller (MCU) in Hinblick auf das Bestimmen eines Authentifizierungsergebnisses in Abhängigkeit von dem gesendeten Antwortdatum (R).

7. Verfahren nach Anspruch 6, weiter umfassend die Schritte zum
- Generieren, durch das gesicherte Element (SE) eines weiteren Challenge-Datums ausgehend von dem generierten Zufallsdatum,
- Vergleichen (214) zwischen dem von dem gesicherten Element (SE) des Mikrocontrollers (MCU) empfangenen Challenge-Datum und dem weiteren, durch das gesicherte Element (SE) generierten Challenge-Datum,
- Umsetzen einer Sicherheitsmaßnahme, die angepasst ist, damit das Authentifizierungsergebnis negativ ist, wenn die beiden verglichenen Challenge-Daten unterschiedlich sind.

8. Verfahren nach einem der vorstehenden Ansprüche, wobei das gesicherte Element (SE) eine Chip-Karte ist und/oder wobei der Mikrocontroller (MCU) eine Übertragungsschnittstelle von zuvor durch einen biometrischen Sensor (4) erfassten biometrischen Daten an das gesicherte Element (SE) ist.

9. Verfahren, umfassend eine Authentifizierung durch Challenge-Response (106) eines gesicherten Elements (SE) bei einem Mikrocontroller (MCU), der mit keinem Zufallsgenerator versehen ist, anhand des Verfahrens nach einem der vorstehenden Ansprüche, und eine biometrische Authentifizierung, die nach der Authentifizierung durch Challenge-Response umgesetzt wird, die folgenden Schritte umfassend:
- Genehmigen, durch den Mikrocontroller (MCU), der Einrichtung (108) eines gesicherten Kommunikationskanals zwischen dem gesicherten Element (SE) und dem Mikrocontroller (MCU) unter der Bedingung, dass das Ergebnis der Authentifizierung durch Challenge-Response (106) positiv ist,
- Übertragen (112), durch den Mikrocontroller (MCU), an das gesicherte Element (SE) der zuvor durch einen biometrischen Sensor (4) erfassten biometrischen Daten über den eingerichteten gesicherten Kanal.

10. Computerprogrammprodukt, Programmcodeanweisungen zur Ausführung der Schritte des Verfahrens nach einem der vorstehenden Ansprüche umfassend, wenn dieses Programm durch mindestens einen Prozessor (8, 14) ausgeführt wird.

11. Mikrocontroller (MCU), der mit keinem Zufallsgenerator versehen ist, und eine Kommunikationsschnittstelle (10) mit einem gesicherten Element (SE), sowie mindestens einem Prozessor (8) umfasst, der konfiguriert ist, um im Laufe einer Authentifizierung des gesicherten Elements (SE) durch Challenge-Response beim Mikrocontroller (MCU)
- über die Kommunikationsschnittstelle (10) mindestens ein durch das gesicherte Element (SE) zufällig generiertes Zufallsdatum zu empfangen,
- ein dem Mikrocontroller (MCU) eigenes Challenge-Datum aus dem empfangenen Zufallsdatum zu generieren,
- die Sendung, über die Kommunikationsschnittstelle (10), des im gesicherten Element (SE) generierten Zufallsdatums zu steuern,
- über die Kommunikationsschnittstelle (10) ein durch das gesicherte Element (SE) in Abhängigkeit von dem Challenge-Datum generiertes Antwortdatum zu empfangen,
- ein Authentifizierungsergebnis in Abhängigkeit von dem empfangenen Antwortdatum zu bestimmen.

12. Gesichertes Element (SE), umfassend eine Kommunikationsschnittstelle (12) mit einem Mikrocontroller (MCU), der mit keinem Zufallsgenerator versehen ist, wobei das gesicherte Element (SE) darüber hinaus mindestens einen Prozessor (14) umfasst, der konfiguriert ist, um im Laufe einer Authentifizierung des gesicherten Elements (SE) durch Challenge-Response beim Mikrocontroller (MCU)
- zufällig mindestens ein Zufallsdatum zu generieren,
- die Sendung des Zufallsdatums an den Mikrocontroller (MCU) durch die Kommunikationsschnittstelle (12) zu steuern,
- ein dem Mikrocontroller (MCU) eigenes, und durch den Mikrocontroller (MCU) aus dem gesendeten Zufallsdatum generiertes Challenge-Datum zu empfangen,
- ein Antwortdatum zu generieren, das von dem empfangenen Challenge-Datum abhängig ist,
- die Sendung durch die Kommunikationsschnittstelle (12) des Antwortdatums an den Mikrocontroller (MCU) im Hinblick auf eine Bestimmung eines Authentifizierungsergebnisses in Abhängigkeit von dem gesendeten Antwortdatum zu steuern.

13. Biometrisches Authentifizierungssystem (1), umfassend einen Mikrocontroller (MCU) nach Anspruch 11, und ein gesichertes Element (SE) nach Anspruch 12, wobei der Mikrocontroller (MCU) weiter konfiguriert ist zum
- Genehmigen der Einrichtung eines gesicherten Kommunikationskanals zwischen dem gesicherten Element (SE) und dem Mikrocontroller (MCU) unter der Bedingung, dass das Ergebnis der Authentifizierung durch Challenge-Response positiv ist,
- Übertragen, über den eingerichteten gesicherten Kanal, der zuvor durch einen biometrischen Sensor (4) erfassten biometrischen Daten an das gesicherte Element (SE) .

## Claims

1. A method for authenticating by challenge-response (106) a secure element (SE) to a microcontroller (MCU) without a random generator, the method comprising the following steps implemented by the microcontroller (MCU) :
- receiving at least one random datum (T, IDX) generated randomly by the secure element (SE),
- generating (206, 208, 210) a challenge datum (Z) specific to the microcontroller (MCU) from the random datum (T, IDX) received,
- sending (212) the generated challenge datum (Z) to the secure element (SE),
- receiving a response datum (R) generated by the secure element (SE) based on the challenge datum (Z),
- determining (220) an authentication result based on the response datum received.

2. The method according to claim 1, wherein the secure element (SE) receives a set of random data (T, IDX) during the step of receiving at least one random datum, and wherein the generation of the challenge datum (Z) comprises sub-steps of
- selecting (206) two random data (X1, X2) from the set of random data received,
- encrypting (208) one (X1) of the two random data using the other (X2) of the two random data as encryption key, so as to produce an encrypted random datum (Y), the challenge datum (Z) depending on the encrypted random datum (Y).

3. The method according to claim 2, wherein the set of random data comprises a table (T) and an index datum (IDX) associated with the table (T), and wherein one of the two random data (X1) is a part of the table (T) located according to the index datum (IDX).

4. The method according to claim 3, wherein the other of the two random data (X2) is a part of the table (T) complementary to the part located based on the index datum (IDX).

5. The method according to one of claims 2 to 4, wherein the generation of the challenge datum further comprises a truncation (210) of the encrypted random datum (Y).

6. The method for authenticating by challenge-response a secure element (SE) to a microcontroller (MCU) without a random generator, the method comprising the following steps implemented by the secure element (SE):
- randomly generating (202) at least one random datum (T, IDX),
- sending (204) the random datum (T, IDX) to the microcontroller (MCU),
- receiving a challenge datum (Z) specific to the microcontroller (MCU) and generated by the microcontroller (MCU) from the random datum (T, IDX) sent,
- generating (216) a response datum (R) depending on the challenge datum (Z) received,
- sending (218) the response datum (R) to the microcontroller (MCU) in order to determine an authentication result based on the response datum (R) sent.

7. The method according to claim 6, further comprising steps of
- generating by the secure element (SE) another challenge datum from the generated random datum,
- comparing (214) the challenge datum received by the secure element (SE) of the microcontroller (MCU) and the other challenge datum generated by the secure element (SE),
- implementing an adapted security measure so that the authentication result is negative when the two challenge data compared are different.

8. The method according to one of the preceding claims, wherein the secure element (SE) is an integrated circuit card and/or wherein the microcontroller (MCU) is an interface for transmitting biometric data previously acquired by a biometric sensor (4) to the secure element (SE) .

9. The method comprising a challenge-response authentication (106) of a secure element (SE) to a microcontroller (MCU) without a random generator by means of the method according to one of the preceding claims, and a biometric authentication, implemented after the challenge-response authentication, comprising steps of:
- authorising, by the microcontroller (MCU), the establishment (108) of a secure communication channel between the secure element (SE) and the microcontroller (MCU) provided that the result of the challenge-response authentication (106) is positive,
- transmitting (112), by the microcontroller (MCU) to the secure element (SE), biometric data previously acquired by a biometric sensor (4) via an established secure channel.

10. A computer program product comprising program code instructions for executing the steps of the method according to one of the preceding claims, when this program is executed by at least one processor (8, 14).

11. A microcontroller (MCU) without a random generator and comprising an interface (10) for communicating with a secure element (SE) as well as at least one processor (8) configured, during a challenge-response authentication of the secure element (SE) to the microcontroller (MCU), for
- receiving, via the communication interface (10), at least one random datum generated randomly by the secure element (SE),
- generating a challenge datum specific to the microcontroller (MCU) from the random datum received,
- controlling the sending by the communication interface (10) of the generated challenge datum to the secure element (SE),
- receiving, via the communication interface (10), a response datum generated by the secure element (SE) based on the challenge datum,
- determining an authentication result based on the response datum received.

12. A secure element (SE) comprising a communication interface (12) with a microcontroller (MCU) without a random generator, the secure element (SE) moreover comprising at least one processor (14) configured, during a challenge-response authentication of the secure element (SE) to the microcontroller (MCU), for
- randomly generating at least one random datum,
- controlling the sending of the random datum to the microcontroller (MCU) via the communication interface (12),
- receiving a challenge datum specific to the microcontroller (MCU) and generated by the microcontroller (MCU) from the random datum sent,
- generating a response datum depending on the challenge datum received,
- controlling the sending by the communication interface (12) of the response datum to the microcontroller (MCU) in order to determine an authentication result based on the response datum sent.

13. A biometric authentication system (1) comprising a microcontroller (MCU) according to claim 11 and a secure element (SE) according to claim 12, wherein the microcontroller (MCU) is moreover configured for
- authorising the establishment of a secure communication channel between the secure element (SE) and the microcontroller (MCU) provided that the result of the challenge-response authentication is positive,
- transmitting to the secure element (SE) via the established secure channel biometric data previously acquired by a biometric sensor (4).
